# EUROPEAN PATENT SPECIFICATION

(11) **EP 3 895 518 B1**
(45) Date of publication and mention of the grant of the patent: **27.12.2023**
(21) Application number: 20749646.4
(22) Date of filing: 24.01.2020
(51) Int. Cl.: A01D 41/127, A01B 79/00

(54) **GRAIN MEASURING DEVICE, COMBINE, FIELD MANAGEMENT SYSTEM**
GETREIDEMESSVORRICHTUNG, MÄHDRESCHER, FELDVERWALTUNGSSYSTEM
DISPOSITIF DE MESURE DE GRAIN, MOISSONNEUSE-BATTEUSE, SYSTÈME DE GESTION DE CHAMP

(30) Priority: 30.01.2019 JP 2019013892
(43) Date of publication of application: 20.10.2021
(73) Proprietor: TOPCON CORPORATION, Tokyo 174-8580 (JP)
(72) Inventor: AKIYAMA, Shugo, Tokyo 174-8580 (JP)
(74) Representative: Schmitt-Nilson Schraud Waibel Wohlfrom Patentanwälte Partnerschaft mbB
(86) International application number: PCT/JP2020/002524
(87) International publication number: WO 2020/158605

(56) References cited:
- JP-A- 2006 081 490
- JP-A- 2014 067 308
- JP-A- 2015 204 807
- JP-A- 2015 204 807
- JP-A- 2016 140 282
- JP-A- 2017 060 443
- JP-A- 2019 010 076
- JP-A- 2019 010 076
- US-A1- 2017 172 066
- US-B1- 6 285 198
- US-B2- 10 178 829

## Description

### TECHNICAL FIELD

The present disclosure relates to a combine harvester including a grain measuring device such as what is called a "protein sensor" and a field management system using the grain measuring device.

### BACKGROUND ART

In recent years, in the field of agriculture, there is a known method of measuring components such as nutritional values contained in harvested crops to measure the fertility or other characteristics of soil.

The information on the harvest points of the crops and the data on the measured nutritional values are associated with each other to create a map representing the distribution of fertility in the field and control the growth of the crops. For example, based on this map, additional fertilization, pesticide spraying, or other measures are taken to make the fertility uniform. This reliably provides crops uniform in quality at a stable yield.

There is a sensor (i.e., a protein sensor) that measures the content of protein among the nutrients contained in the crops, namely, grains.

There is a known method of mounting such a sensor on a harvester (i.e., a combine harvester) and measuring the nutrients of grains at the time of harvest (see e.g., Patent Document 1).

In addition, there is a known method of creating a map representing the distribution of the fertility in a field based on the information on the measured nutrients (see e.g., Patent Document 2).

JP 2017 060443 A discloses a combine-harvester for cutting grain culms from a field while driving, storing grains obtained by threshing the harvested grain culms in a grain tank, and dividing the field into a plurality of sections.

US 10,178,829 B2 discloses combines for reaping culms in a field while traveling, and accumulating, in a grain tank, grains obtained by threshing reaped culms, and to grain evaluation control apparatuses for combines.

### CITATION LIST

### PATENT DOCUMENTS

PATENT DOCUMENT 1: Japanese Unexamined Patent Publication No. 2014-67308
PATENT DOCUMENT 2: Japanese Unexamined Patent Publication No. 2016-171749

### SUMMARY OF THE INVENTION

### TECHNICAL PROBLEM

In the measurement according to the Patent Document 1, however, when the combine harvester reaps no crops at the time of harvest (e.g., when the combine harvester moves in the field or cuts weeds at the ridges), the sensor continues the measurement processing even without reaping any grains such as wheat. Accordingly, unnecessary data (i.e., noise) other than the nutritional values is acquired, which degrades the measurement accuracy.

When the sensor continues the measurement processing, the measurement data is acquired also at the time of reaping no grains, which requires an enormous data capacity for storing the measurement results. In addition, the measurement results include the measurement data obtained while reaping no grains. This requires extra work such as removing such data to create a fertility map of the field, which degrades the work efficiency.

The present invention was made to solve the problems. It is an objective of the present invention to provide a combine harvester and a field management system capable of improving the accuracy in measuring grains and the efficiency in data processing.

### SOLUTION TO THE PROBLEM

In order to achieve the objective, a combine harvester according to the present invention is defined in claim 1.

The reaping determination unit determines whether the combine harvester is in the state of reaping the grains based on a cutting position or a standby position of the cutter.

The reaping determination unit determines the state of reaping the grains by detecting collision of kernels conveyed in the combine harvester.

The reaping determination unit captures an image of an inside of a path for conveying the kernels in the combine harvester, and determines the state of reaping the grains based on the image captured.

The reaping determination unit further includes:
a position information acquisition unit capable of acquiring position information; and
a storage unit configured to store the position information acquired by the position information acquisition unit and information on the component of the grains measured by the measurement unit.

In order to achieve the objective, a field management system according to the present invention is defined in claim 5.

### ADVANTAGES OF THE INVENTION

The present invention using the unit described above improves the accuracy in measuring grains and the efficiency in data processing.

### BRIEF DESCRIPTION OF THE DRAWINGS

FIG. 1 is a schematic configuration diagram showing a configuration of a combine harvester including a grain measuring device according to an embodiment of the present invention.
FIG. 2 is a flowchart showing a method of measuring grains using the grain measuring device according to the embodiment of the present invention.
FIG. 3 is a schematic configuration diagram of a reaping determination unit of a grain measuring device according to a first variation.
FIG. 4 is a schematic configuration diagram of a reaping determination unit of a grain measuring device according to a second variation.

### DESCRIPTION OF EMBODIMENTS

An embodiment of the present invention will now be described with reference to the drawings.

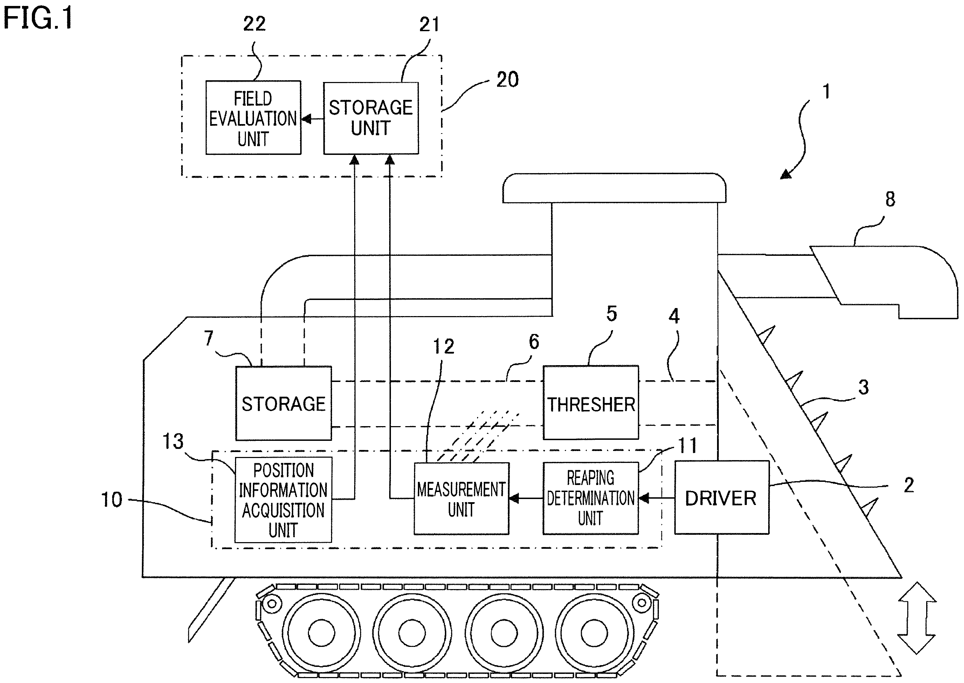

FIG. 1 shows a schematic configuration diagram of a combine harvester including a grain measuring device according to this embodiment. With reference to the diagram, the configuration according to the embodiment of the present invention will be described below.

As shown in FIG. 1, a combine harvester 1 is a crawler traveling, head feed combine harvester capable of self-traveling with a pair of right and left crawlers that are driven by an engine (not shown). Examples of the grains to be reaped and harvested by the combine harvester include grass such as wheat and rice.

This combine harvester 1 includes, at the front of the vehicle body, a cutter 3 movable up and down by a driver 2. The driver 2 is a hydraulic actuator, for example, movable up and down with respect to the cutter 3 between a cutting position indicated by a dotted line in FIG. 1 and a standby position indicated by a solid line.

At the cutting position, the cutter 3 cuts the straw of grains planted in a field and supplies the cut straw to a thresher 5 via a first conveyor 4. The cutter 3 includes a cutting blade and a receiving blade like a hair clipper (not shown), and cuts the crops at a height near the ground through the reciprocating motion of the cutting blade.

The combine harvester 1 lifts the cutter 3 up to the standby position not to hinder the travel while reaping no grains, and down to the cutting position when reaping grains. Such lift up and down of the cutter 3 through the driver 2 can be operated by a lifting lever (not shown). The driver 2 moves up and down in accordance with a binary drive signal transmitted from a control unit (not shown), for example, at 0 V when lifting up the cutter 3 and at 5 V when lifting down the cutter 3. When the drive signal indicates 5 V, it is thus determined that the cutter 3 is at the cutting position and the combine harvester 1 is in the state of reaping grains.

The first conveyor 4 is a conveyor chain or a rake-up belt, for example that aligns the grain straw cut by the cutter 3 and feeds the aligned grain straw to the thresher 5.

The thresher 5 includes a threshing cylinder (not shown) attached with a large number of threshing teeth. The threshing cylinder rotates to remove the grain straw and separate the kernels from the ears. The thresher 5 is connected to a storage 7 via a second conveyor 6.

The second conveyor 6 has a path for conveying, to the storage 7, the kernels obtained after the threshing. The second conveyor 6 may include, for example, a sorting mechanism for sorting the kernels out of the crops to be threshed.

The storage 7 is a tank that stores the kernels supplied from the second conveyor 6. The storage 7 is connected to a discharge auger 8 that discharges of the kernels stored in the storage 7 outside.

The combine harvester 1 includes a grain measuring device 10 for measuring the components of the reaped grains.

The grain measuring device 10 includes a computer including a CPU, a storage device, and sensors, and functionally includes a reaping determination unit 11, a measurement unit 12, a position information acquisition unit 13, and an external device 20 mainly.

The reaping determination unit 11 functions to determine whether the combine harvester 1 is in the state of reaping grains. Specifically, based on the drive signal of the driver 2, the reaping determination unit 11 determines that the combine harvester 1 is in the state of reaping grains when the cutter 3 is at the cutting position and not in the state of reaping grains when the cutter 3 is at the standby position.

The measurement unit 12 is a sensor that measures the components contained in the kernels obtained after the threshing and, in this embodiment, a protein sensor that measures the amount of protein. Specifically, the measurement unit 12 includes LEDs with four different wavelengths and is disposed in the path of the second conveyor 6. The measurement unit 12 can measure the protein content of the kernels by sequentially irradiating the kernels passing through the second conveyor 6 with measuring light from the LEDs, receiving the reflected light, integrating and averaging the amounts of the reflected light.

The position information acquisition unit 13 functions to acquire the position information on the combine harvester 1 and), for example, a global navigation satellite system (GNSS) receiver such as a global positioning system (GPS).

In this embodiment, a field management system including the external device 20 for the grain measuring device 10 outside the combine harvester 1.

The external device 20 is, for example, a personal computer or a tablet terminal including a storage unit 21 and a field evaluation unit 22.

The storage unit 21 is a storage medium that stores various data and, for example, a hard disk or a flash memory. Examples of the data include the measurement data (i.e., component information) on the protein of the kernels measured by the measurement unit 12 and the position information on the combine harvester 1 acquired by the position information acquisition unit 13. The storage unit 21 can acquire the information from the measurement unit 12 and the position information acquisition unit 13 via a wireless or wired communication unit or a detachable memory.

After the reaping in the target field, the field evaluation unit 22 can extract the histories of the measurement data and the position information stored in the storage unit 21 and generate the component distribution of the grains in the field. Specifically, the field evaluation unit 22 is an application program operated by a computer.

The combine harvester 1 with such a configuration including the grain measuring device 10 including the external device 20 stores the measurement data on the protein of the kernels measured by the measurement unit 12 and the position information in the storage unit 21 of the external device 20. The combine harvester 1 then evaluates the measurement data and the position information in the field evaluation unit 22, while or after the end of cutting the grains.

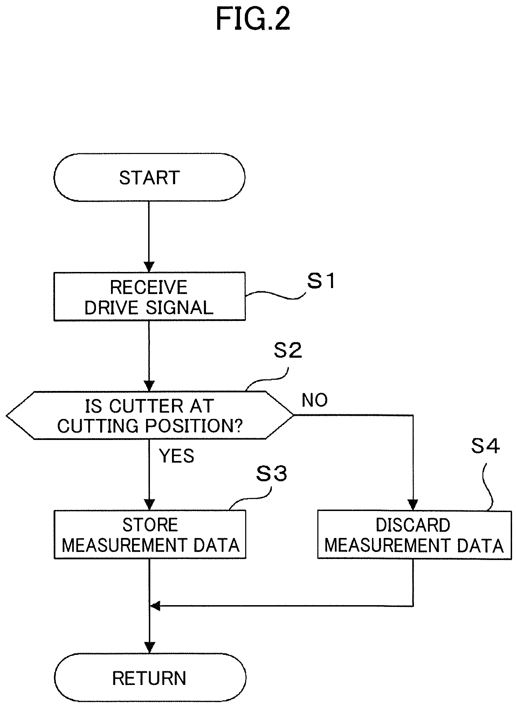

Next, refer to FIG. 2 that is a flowchart showing a grain measurement method using the grain measuring device 10. The grain measurement method will be described with reference to the flowchart.

First, as step S1, the grain measuring device 10 receives a drive signal from the driver 2 of the combine harvester 1, using the reaping determination unit 11.

Then, as step S2, the reaping determination unit 11 determines whether or not the combine harvester 1 is in the state of reaping grains, specifically, whether or not the cutter 3 is at the cutting position, based on the drive signal received in step S1. If the result of the determination is true (Yes), the process proceeds to step S3.

In step S3, the measurement unit 12 measures the protein of the kernels passing through the second conveyor 6 and stores the measured protein in the storage unit 13. This routine returns.

On the other hand, if the result of the determination in step S2 is false (No), that is, when the cutter 3 is at the standby position and unable to cut the grains, the process proceeds to the step S4.

In step S4, the measurement unit 12 discards the measurement data at this time, that is, stores no measurement data in the storage unit 21. This routine returns.

As described above, the grain measuring device 10 saves the data measured by the measurement unit 12 in the storage unit 21 only when the reaping determination unit 11 determines that the combine harvester 1 is in the state of reaping grains, and discards unnecessary data measured when the combine harvester 1 is not in the state of reaping grains. Accordingly, unnecessary data (i.e., noise) is not accumulated when reaping no grains, which improves the accuracy in measuring the components of the grains in the field. In addition, the data capacity required to store the measurement results in the storage unit 21 decreases, which reduces the work such as removing unnecessary data later and improves the work efficiency in the data processing.

In particular, in this embodiment, the reaping determination unit determines the cutting and standby positions of the cutter 3 based on the drive signals from the driver that lifts up and down the cutter, and thus easily determines whether the combine harvester 1 is in the state of reaping grains.

The grain measuring device 10 also includes the position information acquisition unit 13 and stores, together with the measurement data on the protein of the grains measured by the measurement unit 12, the position information in the storage unit 21. Accordingly, the position information and the protein data are associated with each other.

The combine harvester 1 including such a grain measuring device 10 efficiently reaps and harvests the grains, and measures the protein of the reaped grains (i.e., kernels).

The field management system including the field evaluation unit 22 generates the evaluation data such as the fertility map based on the protein of the grains in the field based on the histories of the position information and the protein data on the grains stored in the storage unit 21 for the field harvested by this combine harvester 1.

As described above, the grain measuring device, the combine harvester, and the field management system according to this embodiment improve the accuracy in measuring the grains and the efficiency in the data processing.

An embodiment of the present invention has been described above. The aspects of the present invention are, however, not limited to this embodiment.

In the embodiment described above, the reaping determination unit 11 determines whether the cutter 3 is at the cutting or standby position based on the drive signals of the driver 2. The unit for determining the cutting state of the cutter is however not limited thereto. For example, the cutter may include a sensor for directly detecting the cutting position to determine the position at which the cutting is possible.

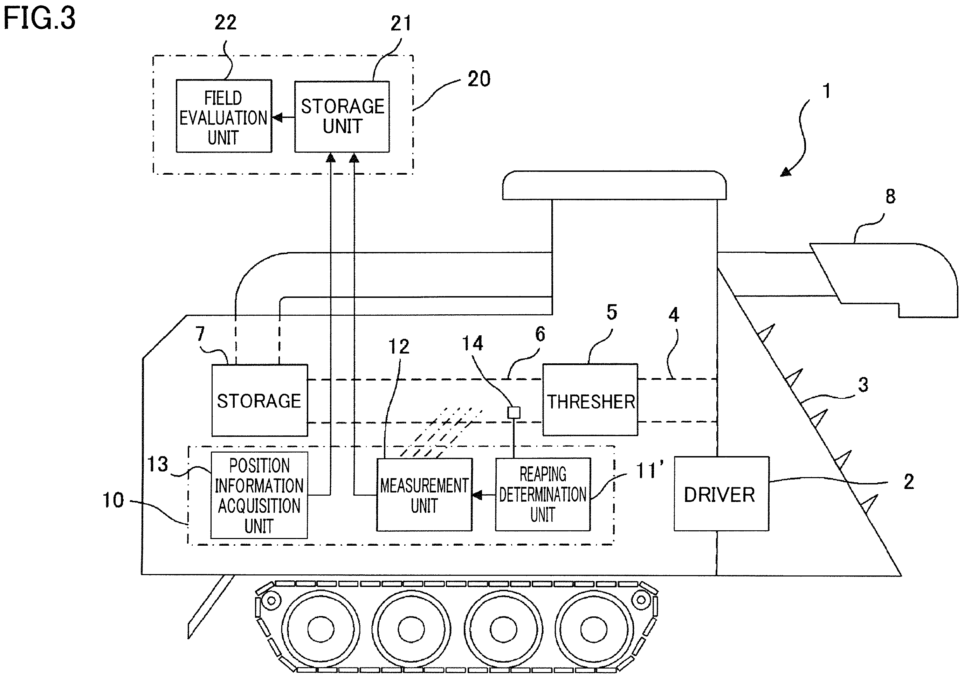

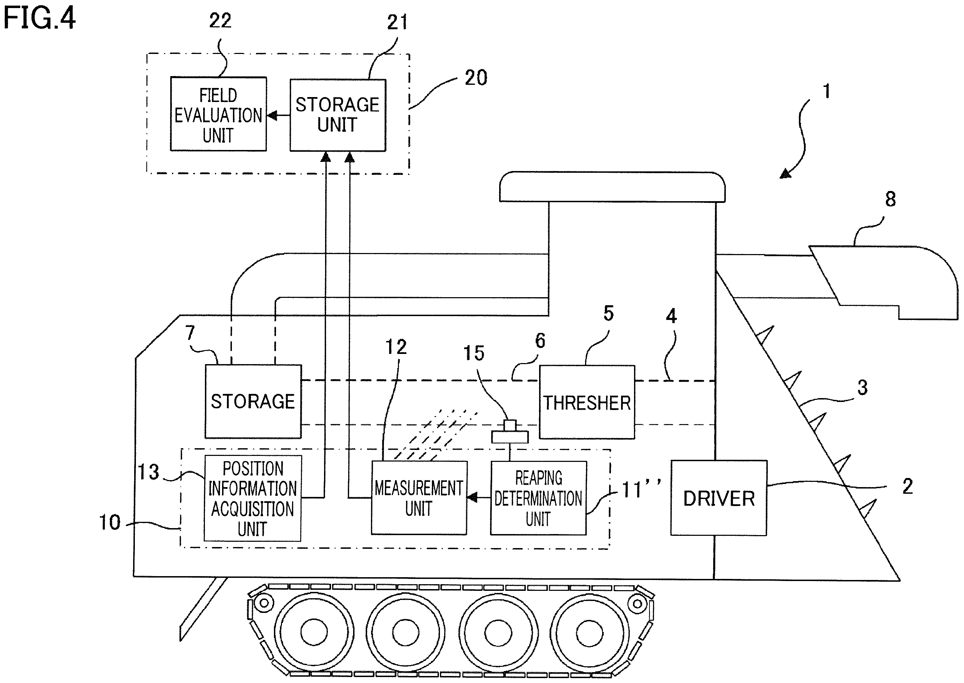

FIGS. 3 and 4 show first and second variations of the reaping determination unit, respectively. The same reference characters as those in the embodiment described above are used to represent equivalent elements. The position information acquisition unit and the field evaluation unit are omitted for the sake of simplicity.

In the first variation shown in FIG. 3, the second conveyor 6 includes a collision sensor 15 that detects collision of the kernels. Connected to the collision sensor 14 is a reaping determination unit 11'. Once the combine harvester 1 reaps the grains whose kernels are actually carried to the second conveyor 6, the kernels collide with the collision sensor 14 and a signal indicating the collision is sent to the reaping determination unit 11'. Upon receipt of the signal, the reaping determination unit 11' determines that the combine harvester 1 is in the state of reaping grains.

In the second variation shown in FIG. 4, the second conveyor 6 includes, in its conveying path, a camera 15 which is connected to a reaping determination unit 11". The camera 15 captures moving images or periodically capture still images of the inside of the conveying path. The reaping determination unit 11" detects the flow of the kernels by analyzing the images (i.e., the moving or still images) captured by the camera 15. If the kernels flow, the reaping determination unit 11" determines that the combine harvester 1 is in the state of reaping the grains.

As described above, the reaping determination units according to the first and second variations determine that the kernels actually pass through the second conveyor regardless of the position of the cutter, and save only the results of measurements at the time. That is, highly accurate and efficient grain measurement is possible. Note that the reaping determination unit may combine a plurality of determinations such as the determination using the driver as in the embodiment described above, the determination using the collision sensor as in the first variation, and the determinations based on the images as in the second variation.

In the embodiment described above and the first and second variations, the storage unit 21 and the field evaluation unit 22 are located outside the combine harvester 1. The present invention is however not limited to this configuration. For example, at least the storage unit may be included in the grain measuring device in the combine harvester, and the field evaluation unit may be located outside. Alternatively, both the storage unit and the field evaluation unit may be included in the grain measuring device in the combine harvester.

### DESCRIPTION OF REFERENCE CHARACTERS

- 1: Combine Harvester
- 2: Driver
- 3: Cutter
- 4: First Conveyor
- 5: Thresher
- 6: Second Conveyor
- 7: Storage
- 10: Grain Measuring Device
- 11, 11', 11": Reaping Determination Unit
- 12: Measurement Unit
- 13: Position Information Acquisition Unit
- 14: Collision Sensor
- 15: Camera
- 20: External Device
- 21: Storage Unit
- 22: Field Evaluation Unit

## Claims

1. A combine harvester (1) for reaping grains using a cutter (3) and harvesting the grains, the combine harvester (1) including a grain measuring device (10) comprising:
a reaping determination unit (11, 11', 11") configured to determine whether the combine harvester (1) is in a state of reaping the grains based on a cutting position or a standby position of the cutter (3),
a measurement unit (12) disposed in a path of a conveyer (6) between a storage (7) and a thresher (5), and configured to measure an amount of protein contained in the kernels of the grains obtained after the threshing using measuring light with four different wavelengths, save a result of measurement when the reaping determination unit (11, 11', 11") determines that the combine harvester (1) is in the state of reaping the grains, and discard unnecessary data measured when the combine harvester (1) is not in the state of reaping grains,
wherein the measurement unit (12) is configured to measure the protein content of the kernels by sequentially irradiating the kernels passing through the conveyor (6) with measuring light, receiving the reflected light, integrating, and averaging the amounts of the reflected light.

2. The combine harvester of claim 1, wherein
the reaping determination unit (11, 11', 11") is configured to determine the state of reaping the grains by detecting collision of kernels conveyed in the combine harvester (1).

3. The combine harvester of claim 1 or 2, wherein
the reaping determination unit (11, 11', 11") is configured to capture an image of an inside of a path for conveying the kernels in the combine harvester (3), and determine the state of reaping the grains based on the image captured.

4. The combine harvester of any one of claims 1 to 3, the grain measuring device (10) further comprising:
a position information acquisition unit (13) capable of acquiring position information; and
a storage unit (21) configured to store the position information acquired by the position information acquisition unit (13) and information on the component of the grains measured by the measurement unit (12).

5. A field management system comprising:
the combine harvester (1) according to claim 4; and
a field evaluation unit (22) configured to generate, for a field harvested by the combine harvester (1), a component distribution of the grains in the field based on the position information and the information on the component of the grains stored in the storage unit (21).

## Patentansprüche

1. Mähdrescher (1) zur Getreideernte unter Verwendung eines Schneidwerks (3) und zum Ernten der Körner, wobei der Mähdrescher (1) eine Körner - messvorrichtung (10) besitzt, die Folgendes aufweist:
eine Ernte-Bestimmungseinheit (11, 11', 11"), die dazu ausgebildet ist, auf der Basis einer Schneidposition oder einer Bereitschaftsposition des Schneidwerks (3) zu bestimmen, ob sich der Mähdrescher (1) in einem Zu - stand des Erntens des Getreides befindet,
eine Messeinheit (12), die in einem Pfad eines Förderers (6) zwischen ei - nem Speicher (7) und einem Drescher (5) angeordnet ist und dazu ausge - ben ist, eine in den Körnern des nach dem Dreschen erhaltenen Getreides enthaltene Proteinmenge unter Verwendung von Messlicht mit vier unter - schiedlichen Wellenlängen zu messen, ein Messergebnis zu speichern, wenn die Ernte-Bestimmungseinheit (11, 11', 11") feststellt, dass sich der Mähdrescher (1) in dem Zustand des Erntens von Getreide befindet, sowie unnötige Daten zu verwerfen, die gemessen werden, wenn sich der Mäh - drescher (1) nicht in dem Zustand des Erntens von Getreide befindet,
wobei die Messeinheit (12) dazu ausgebildet ist, den Proteingehalt der Kör - ner zu meassen, indem sie die Körner, die den Förderer (6) passieren, nacheinander mit Messlicht bestrahlt, das reflektierte Licht empfängt, die Mengen des reflektierten Lichts integriert und einen Mittelwert bildet.

2. Mähdrescher nach Anspruch 1,
wobei die Ernte-Bestimmungseinheit (11, 11', 11") dazu ausgebildet ist, den Zustand des Erntens von Getreide zu bestimmen, indem sie die Kollision von im Mähdrescher (1) beförderten Körnern erfasst.

3. Mähdrescher nach Anspruch 1 oder 2,
wobei die Ernte-Bestimmungseinheit (11, 11', 11") dazu ausgebildet ist, ein Bild von einer Innenseite eines Pfads zum Fördern der Körner in dem Mäh - drescher (3) zu erfassen und den Zustand des Erntens von Getreide auf der Basis des erfassten Bildes zu bestimmen.

4. Mähdrescher nach einem der Ansprüche 1 bis 3,
wobei die Körnermessvorrichtung (10) ferner aufweist:
eine Positionsinformations-Erfassungseinheit (13), die in der Lage ist, Posi - tionsinformation zu erfassen; und
eine Speichereinheit (21), die dazu ausgebildet ist, die von der Positionsinformations-Erfassungseinheit (13) erfasste Positionsinformation sowie Information über die von der Messeinheit (12) gemessene Komponente der Körner zu speichern.

5. Feldmanagementsystem, das Folgendes aufweist:
den Mähdrescher (1) nach Anspruch 4; und
eine Feld-Auswerteeinheit (22), die dazu ausgebildet ist, für ein von dem Mähdrescher (1) abgeerntetes Feld eine Komponentenverteilung der Körner auf dem Feld auf der Basis der Positionsinformation und der Information über die Komponente der Körner zu erzeugen, die in der Speichereinheit (21) gespeichert sind.

## Revendications

1. Moissonneuse-batteuse (1) permettant de moissonner les grains à l'aide d'une barre de coupe (3) et de récolter les grains, la moissonneuse-batteuse (1) incluant un dispositif de mesure des grains (10) qui comprend :
une unité de détermination de moisson (11, 11', 11") configurée de manière à déterminer si la moissonneuse-batteuse (1) est dans un état de moisson des grains selon que la barre de coupe (3) se trouve en position de coupe ou en position de repos,
une unité de mesure (12) disposée sur le trajet d'un convoyeur (6) entre un emplacement de stockage (7) et une batteuse (5) et configurée de manière à mesurer une quantité de protéines contenue dans les amandes des grains obtenues après le battage, à l'aide d'une lampe de mesure présentant quatre longueurs d'onde différentes, à enregistrer un résultat de mesure lorsque l'unité de détermination de moisson (11, 11', 11") détermine que la moissonneuse-batteuse (1) se trouve dans l'état de moisson des grains et à se débarrasser des données inutiles mesurées lorsque la moissonneuse-batteuse (1) ne se trouve pas dans l'état de moisson des grains,
l'unité de mesure (12) étant configurée de manière à mesurer la teneur en protéines des amandes des grains en irradiant séquentiellement les amandes passant par le convoyeur (6) avec une lumière de mesure, en recevant la lumière réfléchie, en intégrant et en calculant la moyenne des quantités de lumière réfléchie.

2. La moissonneuse-batteuse selon la revendication 1, dans laquelle l'unité de détermination de moisson (11, 11', 11") est configurée de manière à déterminer l'état de moisson des grains en détectant la collision d'amandes convoyées dans la moissonneuse-batteuse (1).

3. La moissonneuse-batteuse selon la revendication 1 ou 2, dans laquelle l'unité de détermination de moisson (11, 11', 11") est configurée de manière à capturer une image de l'intérieur d'un trajet de convoyage des amandes dans la moissonneuse-batteuse (3), et à déterminer l'état de moisson des grains sur la base de l'image capturée.

4. La moissonneuse-batteuse selon l'une quelconque des revendications 1 à 3, le dispositif de mesure des grains (10) comprend également :
une unité d'acquisition d'informations de position (13) permettant d'acquérir des informations sur la position ; et
une unité de stockage (21) configurée de manière à stocker les informations de position acquises par l'unité d'acquisition d'informations de position (13) et les informations sur la composante des grains mesurée par l'unité de mesure (12).

5. Système de gestion de champ comprenant :
la moissonneuse-batteuse (1) selon la revendication 4 ; et
une unité d'évaluation de champ (22) configurée de manière à générer, pour un champ moissonné par la moissonneuse-batteuse (1), une répartition de la composante des grains dans le champ en fonction des informations de position et des informations sur la composante des grains stockées dans l'unité de stockage (21).
